# EUROPÄISCHE PATENTSCHRIFT

(11) **EP 2 705 445 B1**
(45) Veröffentlichungstag und Bekanntmachung des Hinweises auf die Patenterteilung: **11.02.2015**
(21) Anmeldenummer: 11729353.0
(22) Anmeldetag: 06.05.2011
(51) Int. Cl.: G06F 17/30, G06F 21/00, H04L 29/06, H04L 29/08

(54) **VERFAHREN ZUR SPEICHERUNG VON DATEN AUF EINEM ZENTRALEN SERVER**
METHOD FOR STORING DATA ON A CENTRAL SERVER
PROCÉDÉ DE STOCKAGE DE DONNÉES SUR UN SERVEUR CENTRAL

(43) Veröffentlichungstag der Anmeldung: 12.03.2014
(73) Patentinhaber: SECLOUS GmbH, 80339 München (DE)
(72) Erfinder: RAUDASCHL, Wolfgang, 1230 Wien (AT)
(74) Vertreter: Ellmeyer, Wolfgang
(86) Internationale Anmeldenummer: PCT/AT2011/000216
(87) Internationale Veröffentlichungsnummer: WO 2012/151595

(56) Entgegenhaltungen:
- US-A1- 2009 313 483
- US-A1- 2010 058 013
- US-A1- 2010 332 401

## Beschreibung

Die Erfindung betrifft ein Verfahren zur Speicherung von Daten auf einem zentralen Server, wobei es eine Vielzahl an Benutzern mit jeweils einem Benutzer-Kennwort gibt, welches zumindest für die Bildung eines Benutzer-Schlüssels verwendet wird, und zumindest einigen dieser Benutzer zumindest jeweils ein Client mit darauf gespeicherten Daten zugeordnet ist und zumindest Teile dieser Daten je nach Bedarf in zumindest einen hochzuladenden Datenblock zerlegt werden und je Datenblock anhand eines für diesen eindeutigen Datenblock-ID-Wertes abgeglichen wird, ob ein übereinstimmender Datenblock bereits am Server vorhanden ist und die dort nicht vorhandenen Datenblöcke auf den zentralen Server geladen werden und wobei eine hochzuladende Daten-Datenblock-Liste erstellt und auf den zentralen Server geladen wird, anhand welcher bei Datenanforderung der am zentralen Server abgelegten Daten durch den Benutzer diese Daten wieder in einem Datenwiederherstellungsschritt in ursprünglicher Form generiert werden können.

Ein derartiges Verfahren ist etwa in der US 2010/332401 A1 offenbart.

In der US 2009/313483 A1 ist das Aufnehmen des Datenblock-ID-Wertes und eines Datenblock-Schlüssel-ID-Wertes in eine Datenblock-Schlüsselliste, sofern dieser Datenblock-ID-Wert in der Datenblock-Schlüsselliste noch nicht vorhanden ist, und das Hinaufladen der Datenblock-Schlüsselliste vom Client auf den zentralen Server gezeigt.

Aus der US 2010/058013 A1 geht ein Datenblock-Schlüssel hervor, der ausschließlich anhand des verschlüsselten Datenblockes unter Verwendung einer Schlüsselgenerierungsvorschrift generiert wird.

Unter Daten wird hierin ganz allgemein jede Form von Informationen verstanden, insbesondere können diese in geordneter Form als Dateien wie z.B. Bilder, Dokumente, Programme und Archive vorliegen. Weiters können Daten auch Datensätze aus einem Datenbank-Server oder andere Informationen sein, die z.B. direkt über den Arbeitsspeicher des Clients auf den zentralen Server gespeichert werden sollen. Wird in diesem Dokument von Dateien gesprochen, ist dies gleichwertig mit Daten zu sehen und umgekehrt. Der Name von Dateien würde z.B. einer Beschreibung von Daten entsprechen.

Unter einem zentralen Server wird auch eine Cloud verstanden, in welcher eine Vielzahl an Servern oder Serverfarmen gegebenenfalls miteinander verbunden sind, mitunter an geographisch verteilten Standorten. Wird nachfolgend von Server geschrieben, sind diese zentralen Server gemeint. Die zentralen Server werden von Online-Speicherplatz-Anbietern (Service-Anbietern) betrieben, um auf diesen Online-Speicherplatz sowie die notwendigen Ressourcen für Serverseitige Operationen abzudecken.

Der Begriff des zentralen Servers wird in den meisten Ausführungsbeispielen einen externen Server beschreiben, der mit dem Benutzer über ein Informationsnetzwerk wie z.B. das Internet verbunden ist. Genauso kann der zentrale Server in einem Firmengebäude nur deren Mitarbeitern zur Verfügung stehen.

Weiters sind z.B. private Anwender sowie Firmen und deren Mitarbeiter unter der Bezeichnung Benutzer zusammengefasst, wobei ein Online-Speicherplatz-Anbieter eine Vielzahl an Benutzern als seine Kunden hat.

In der vorliegenden Anmeldung wird der Begriff Client verwendet, um z.B. PCs, Laptops, NetBooks, iPhones und dergleichen zu beschreiben, also jene Geräte, auf welchen die Benutzer ihre Daten z.B. in Form von Dateien gespeichert haben und von welchen aus sie diese auf den Server speichern wollen. Auf den Clients läuft eine Applikation, welche die Schritte des Verfahrens in der jeweiligen Ausführungsform anwendet.

Es wird davon ausgegangen, dass zur Übertragung von Daten zwischen dem Server und dem Client vom Service-Anbieter eine geeignete verschlüsselte Leitung nach dem Stand der Technik verwendet wird, wie z.B. eine SSL-Verbindung (Secure Sockets Layer).

Wird in der Anmeldung von Verschlüsselung gesprochen, kann dafür jeder geeignete Verschlüsselungsalgorithmus verwendet werden, vorzugsweise der AES 256 Bit.

Analog gilt dies, wenn Hash-Werte berechnet werden sollen, hier wird seitens des Erfinders einer der SHA3-Finalkandidaten 256 Bit empfohlen, da diese wesentlich schneller sind der SHA2.

Es soll angemerkt werden, dass bei der vorliegenden Erfindung die Verwendung von RSA oder Elliptischen Kurven nicht notwendig ist, deren Verwendung aber optional als Verschlüsselungsalgorithmus verwendet werden kann. Asynchrone Verschlüsselungsalgorithmen sind aber um etwa den Faktor 1000 langsamer, weshalb von dessen Verwendung abgesehen werden sollte.

Laut Gartner Group und andere IT-Marktforschungs-Firmen zählt Cloud-Computing zu den wichtigsten IT-Trends der nahen Zukunft.

Cloud Computing bietet für Kunden den dynamisch skalierbaren Zugriff auf Ressourcen im Netz mit dem Vorteil, dass der Benutzer nur für die Ressourcen bezahlt, die er wirklich benötigt, und zwar nur solange, wie er sie tatsächlich benötigt. Weiters ist es möglich, Ressourcen gemeinsam zu nutzen, sei firmenintern und/oder mit anderen Kunden oder Partnern, wobei Ressourcen als Speicherplatz, als Prozessorleistung, als Services, etc. definiert werden.

Ein sehr wichtiger Aspekt für das Arbeiten in der Cloud ist die hohe Verfügbarkeit der Ressourcen und die hohe Sicherheit, dass keine Daten verloren gehen können.

Die unterschiedlichen Cloud-Computing Ausprägungen werden aufteilt in
- SaaS Software as a Service (Network-hosted application)
- DaaS Data as a Service (Customer queries against provider's database)
- PaaS Platform as a Service (Network-hosted software development platform)
- IaaS Infrastructure as a Service (Provider hosts customer VMs or provides network storage)
- IPMaaS Identity and Policy Management as a Service (Provider manages identity and/or access control policy for customer)
- NaaS Network as a Service (Provider offers virtualized networks (e.g. VPNs))
und werden derzeit schon von vielen Millionen von Kunden weltweit genutzt.

Die vorliegende Erfindung betrifft im Bereich des Cloud-Computing primär die DaaS-Ausprägung, ist aber weder auf diese Ausprägung noch auf die Anwendung im Cloud-Computing beschränkt.

Die amerikanische Firma Dropbox zum Beispiel ist diesem Bereich seit 2008 tätig und hat 2011 bereits 25 Millionen Kunden mit 200 Millionen täglich gespeicherten Dateien. Dropbox stellt seinen Benutzern Online-Speicherplatz mit gleichzeitiger Datei-Versionskontrolle zur Verfügung, mit der Besonderheit, dass dieser Online-Speicherplatz nicht nur zur Online-Datensicherung verwendet werden kann sondern dass die Dateien auf diesem Speicher auf einer Vielzahl an gewünschten Clients synchron gehalten werden.

Weitere Firmen, die Cloud Services bereitstellen sind z.B. Amazon, Google, Cisco, Microsoft und viele mehr. Cloud Computing wird von IBM, Microsoft, Oracle, Apple, ... als IT-Service mit den höchsten Zuwachsraten in den nächsten Jahren gesehen und auch dementsprechend beworben.

Trotz der Vorteile von Cloud Computing ergeben sich Hemmschwellen für potenzielle Benutzer (von Benutzern für private Zwecke bis hin zu großen Welt-Konzernen. Solche Hemmschwellen sind unter anderem:
- Die Erfüllung von Gesetzen verlangt die Datenhoheit - Daten müssen den staatlichen Behörden auf Anfrage zur Verfügung gestellt werden
- Security und Datenschutz ist aufgrund von Speicherplatz-Optimierungen seitens des Speicherplatz-Anbieters nur bedingt gewährleistet
- Antwortzeiten und Bandbreiten Garantie kann nicht immer geboten werden, da die Server des Anbieters viele Millionen Benutzer bedienen müssen.

Firmen, die Online-Speicherplatz anbieten, haben viele hunderttausende bis Millionen Benutzer, die ihre Daten mittels deren Server sichern, synchronisieren und verteilen wollen.

Sehr viele dieser Online-Speicherplatz-Anbieter stellen ihren Benutzern eine Versionskontrolle zur Verfügung, was bedeutet, dass alle Dateiversionen zumindest für einen begrenzten Zeitraum behalten werden und der Benutzer sie bei Bedarf wiederherstellen kann. Oftmals werden die Daten - den gesetzlichen Bedingungen entsprechend - unbegrenzt historisiert.

Sicherheit spielt besonders bei kritischen Daten eine entscheidende Rolle, sowohl die Ausfalls-Sicherheit als auch der Schutz der Daten vor unbefugten Dritten. Jedenfalls ist es staatlichen Behörden prinzipiell erlaubt, Einsicht in die gespeicherten Daten jedes Kunden zu nehmen. Dritte sind insbesondere mit erlaubtem Zugriff (z.B. staatliche Behörden) als auch unerlaubtem Zugriff (z.B. Industrie-Spionage oder Hacker), die sich Zugriff auf die Daten verschaffen können.

Viele Dienste verschlüsseln aus diesem Grund die Daten der Benutzer mit einem firmeneigenen Schlüssel, der für alle Kunden dieser Firma der identisch ist, ohne dass die Kunden diesen Schlüssel kennen dürfen. Das bedingt aber gleichzeitig, dass die Daten unverschlüsselt über eine verschlüsselte Verbindung zum Server gesendet werden müssen, um dort vom Server verschlüsselt zu werden. Gleiches Prinzip gilt, wenn der Server entweder für jeden Kunden einen Schlüssel erstellt oder sogar für jede Datei - sobald der Server die Schlüssel-Erstellung übernimmt, kennt er die Schlüssel und muss sie im Zweifelsfall an Dritte weitergeben. Somit ist es den Dritten einfach möglich, die Daten entschlüsselt zu erhalten.

### Derzeitige Implementierungen Variante 1:

Die Variante 1 der derzeitigen Implementierungen ermöglicht es dem Benutzer, seine Daten am Client zu verschlüsseln und in bereits verschlüsselter Form an den Server zu übertragen. Jeder einzelne Benutzer wählt einen Benutzernamen und ein Benutzer-Kennwort, wobei dieses Benutzer- Kennwort dem Server nicht übermittelt wird. Auf den Clients (PCs, Mac-Books, ...) der Benutzer läuft ein Programm, welches folgende Schritte ausführt:
- Die Daten der Benutzer werden in Datenblocks zerlegt,
- es wird ermittelt, welche Datenblöcke dieser Benutzer bereits erstellt und hochgeladen hat, und welche Datenblöcke noch auf den Server geladen werden müssen
- Datenblöcke, die auf den Server geladen werden müssen, werden alle mit dem gleichen, nur dem Benutzer bekannten Schlüssel verschlüsselt
- eine Daten-Datenblockliste-Liste wird erstellt, welche die Datenblöcke der jeweiligen Daten bzw. Dateien aneinander reiht.
- Die Daten-Datenblock-Liste wird mit dem gleichen, dem Benutzer bekannten Schlüssel verschlüsselt und zumindest die Änderungen in dieser Liste werden auf den Server hinaufgeladen.

Sämtliche dieser generierten Daten werden mit einem Schlüssel verschlüsselt, der aus dem Kennwort des Benutzers generiert wird und erst danach auf den Server geladen. Somit ist es zu keinem Zeitpunkt notwendig, dem Server ein Benutzerkennwort zu übermitteln.

Dieses Verfahren kann als sehr sicher angesehen werden, da eine Zero-Knowledge-Philosophie betrieben wird - die Firma, welche den Speicherplatz zur Verfügung stellt, hat keine verwertbare Informationen über den Inhalt der Daten, die auf ihrem Server liegen.

Ein weiterer wichtiger Aspekt bei diesem Ansatz ist, dass die Server nicht damit belastet werden, die unverschlüsselten Datenblöcke der Benutzer einzeln zu verschlüsseln und zu entschlüsseln. Das spart bei Millionen Benutzern und enormen Datentransfer sehr viele Ressourcen und somit Kosten für den Anbieter.

Doch dieser Ansatz hat einen großen Nachteil gegenüber den derzeitigen Implementierungen der Variante 2: Da die Datenblöcke von jedem Benutzer einzeln auf dessen Client verschlüsselt werden, gibt es keine Möglichkeit zu erkennen, ob Datenblöcke, die ein Benutzer erstellt hat, nicht bereits von vielen anderen Benutzern zuvor erstellt wurden.

Zusammenfassend lässt sich diese Variante als sicherheitsoptimiert und Rechenkapazität-sparend zusammenfassen.

### Derzeitige Implementierungen Variante 2:

Dieser Ansatz verfolgt die Speicherplatz-Ressourcen optimierte Ablage der Daten am Server. Dies wird erreicht durch eine intelligente Komprimierung. Ein Datenblock von beliebiger Größe (z.B. 8 KB) wird durch einen 256-Bit oder kleineren, je Datenblock eindeutigen Wert, ersetzt. Die am Server bereits existierenden Datenblöcke werden durch ihre Identifizierung als "dictionary-based compression" gesehen. Hiermit ist gemeint, dass wie bei einem Stichwort-Verzeichnis eine kurze Zeichenfolge für eine mitunter sehr lange Zeichenfolge stehen kann. Durch Nachschlagen von Abkürzungen findet man die zugehörige, sehr lange Zeichenfolge. Natürlich entsteht ein minimaler Overlay bei jenen Blocks, die nur ein einziger Benutzer ein einziges Mal verwendet. Aber dieser Overlay wird durch die Vorteile um ein Vielfaches ausgeglichen, da eine zusätzliche Komprimierung von mitunter bereits komprimierten Datenblöcken auf einem sehr hohen Level ermöglicht wird.

Konkret können die Anbieter von Datenspeicher, die das Prinzip der Variante 2 anwenden, den Benutzern den von ihnen verwendeten Speicherplatz verrechnen, obwohl sie selbst für diesen Benutzer mitunter nur wesentlich weniger Speicherplatz belegen müssen. Die Wahrscheinlichkeit, gleiche Datenblöcke innerhalb von Daten desselben Benutzers zu finden, ist schon alleine aufgrund der Versionskontrolle sehr hoch, aber aufgrund der hohen Anzahl Daten, die durch die hohe Anzahl der Benutzer bedingt sind, steigt die Wahrscheinlichkeit sehr stark an, auch benutzerübergreifend gleiche Datenblöcke zu finden - nach dem Prinzip der Birthday-Attack: beliebige Datenblöcke beliebiger Benutzer können identisch sein mit beliebigen Datenblöcken beliebiger anderer Benutzer. Ein benutzerübergreifender Datenblock gleicht aufgrund der sich dadurch ergebenden hohen Kompression den Overlay von vielen nicht doppelt vorkommenden Datenblöcken aus. Insgesamt kann durch dieses Verfahren Online-Speicherplatz im zweistelligen Prozentbereich im Vergleich zur oben genannten Variante 1 eingespart werden - ein großer Vorteil für den Dienst-Anbieter der Variante 2.

Der Nachteil dieser Variante ist, dass die in Variante 1 beschriebene Sicherheit zu weiten Teilen nicht erreicht wird. Weiters macht es dieses Verfahren notwendig, dass die Datenblöcke in unverschlüsselter Form an den Server gesendet werden und der Server diese Datenblöcke mit einem Schlüssel verschlüsselt, der nur der den Server betreibenden Firma bekannt ist. Der Benutzer kann die Daten bei dieser Variante nicht selbst verschlüsseln, da er ansonsten den allgemeinen Schlüssel kennen müsste und somit - im Falle eines Zugriffs - sämtliche Daten aller Benutzer entschlüsseln könnte. Trotzdem wiederspricht Variante 1 der Variante 2 gänzlich, da ein gleicher Datenblock von einem ersten Benutzer mit dem Schlüssel des ersten Benutzers und von einem zweiten Benutzer mit dem Schlüssel des zweiten Benutzers verschlüsselt wird. Somit ist es - sofern beide Benutzer nicht zufällig das gleiche Kennwort haben - ausgeschlossen, dass der gleiche Datenblock benutzerübergreifend erkannt werden kann. Der Server kann nicht feststellen, ob zwei Benutzer das gleiche Passwort verwenden, außerdem sollte der Benutzerschlüssel aus diesem Grund auch den Benutzernamen einbezogen haben. Es besteht einzig die Möglichkeit, dass gleiche verschlüsselte Datenblöcke zwei unterschiedliche unverschlüsselte Datenblöcke sind, die aufgrund unterschiedlicher Benutzer-Schlüssel zum gleichen verschlüsselten Datenblock werden - da dies aber praktisch ausgeschlossen ist, kann aus diesem Prinzip keine Kompression durch gleiche Datenblöcke erreicht werden.

### Ziel der Erfindung:

Ziel der Erfindung ist es daher, ein Verfahren des zweiten Ansatzes bereitzustellen, welches trotzdem eine Zero-Knowledge-Philosophie ermöglicht und die Daten der Kunden entsprechend Dritten gegenüber bestens schützt - auch wenn sämtliche Informationen über die Benutzer-Aktivitäten und die vom Benutzer gespeicherten Daten für diese Dritten verfügbar sind.

Weiters ist es Ziel der Erfindung, dem Speicherplatz-Anbieter eine Möglichkeit zu geben, das Vertrauen seiner End-Kunden zu stärken, indem er ein Verfahren zeigen kann, dass für diese einfach zu verstehen und in Bezug auf Sicherheit für diese glaubwürdig ist. Somit wird eine große Hemmschwelle für die Verwendung der Cloud durch End-Kunden beseitigt.

Es ist auch Ziel der Erfindung, ein Verfahren zu zeigen, welches große Teile der Operationen, insbesondere das Komprimieren, das Verschlüsseln und das Entschlüsseln von Datenblöcken auf den Client auslagert wie dies nur bei der oben beschrieben Variante 1 möglich ist. Gleichzeitig soll der Rechenaufwand am Client insofern minimiert werden, als dass anhand eines unverschlüsselten Blocks und eines minimalen Uploads auf den Server erkannt werden kann, ob dieser Datenblock bereits existiert oder ob dieser in vorzugsweise komprimierter aber zumindest in verschlüsselter Form auf den Server geladen werden muss.

Die Erfindung soll auch ein Verfahren zeigen, welches es keinesfalls ermöglicht, dass ein Benutzer durch das Senden manipulierter Daten auf den Server Schaden anrichten kann.

Zusammenfassend soll das Verfahren höchstmöglichen Schutz der Daten gegenüber Dritten unten folgenden Bedingungen bieten:
a) Diese Dritten haben den Zugriff auf alle Schlüssel, kennen alle verwendeten Algorithmen und das gesamte Verfahren, welches auf dem Server angewandt wird.
b) Es ist diesen Dritten möglich, die auf dem Server gespeicherten Informationen jederzeit einzusehen, insbesondere alle Daten bzw. Datenblöcke und die Daten-Datenblock-Liste, die dem das Verfahren anwendenden Benutzer betreffen. Somit muss das Verfahren sicherstellen, dass die auf dem Server gespeicherten Daten verschlüsselt werden, und zwar mit einem Schlüssel, der dem Dienstleistungsanbieter zu keinem Zeitpunkt bekannt ist bzw. die mit einem Schlüssel, der nur für diejenigen bekannt ist, welche die Information gespeichert haben, die durch das Wissen erhalten wird, wie der verschlüsselte Datenblock bit-genau in unverschlüsselter Form aussieht.
c) Es ist diesen Dritten möglich, alle Einstellungen und Benutzer-Informationen jederzeit einzusehen, insbesondere Benutzername und Passwörter - somit muss das Verfahren vermeiden, dass es notwendig wird, dem Server das Passwort und vorzugsweise den Benutzernamen in für diesen verwertbarer Form mitzuteilen.
d) Es ist diesen Dritten möglich, ein Log-File bzw. Protokoll einzusehen, in welchem jede Anfrage an den Server, jeder Upload und jeder Download sowie jede Änderung des Benutzers in chronologischer Reihenfolge vermerkt ist. Somit muss das Verfahren sicherstellen, dass Dritte keine Informationen erhalten, wenn ein Benutzer z.B. nur einen kleinen Ausschnitt aus einer Datei ändert und nur diese Änderung auf den Server speichert.
e) Dieser Schutz der Daten soll gewährleistet sein, obwohl das Verfahren gleichzeitig eine Möglichkeit bieten muss, Daten in Datenblöcke bestimmter oder variabler Größe aufzuteilen und zu erkennen, ob der Benutzer selbst oder ein beliebiger anderer Benutzer diesen Datenblock bereits einmal erstellt und hochgeladen hat. Somit kann für den Speicherplatz-Anbieter das sehr wichtige Reduzieren seiner Ressourcen-Belastung gewährleistet werden.
f) Als wichtigste Anforderung gilt somit, dass das Benutzerkennwort keinesfalls auf dem Server gespeichert sein darf, vorzugsweise wird nicht einmal der Benutzername selbst gespeichert sondern beispielsweise nur dessen Hash-Wert. Das ermöglicht es, den Benutzernamen zusammen mit dem Benutzer-Kennwort für die Bildung des Benutzer-Hauptschlüssels heranzuziehen ohne dem Server Informationen darüber zu liefern. Benutzer sind durch den Hash-Wert des Benutzernamens am Server ebenfalls eindeutig zu identifizieren. Um den Benutzer mit zugehörigem Passwort am Server identifizieren zu können, kann beispielsweise eine Zeichenfolge gebildet werden, welche den Benutzernamen, das Benutzer-Kennwort und eine Konstante, vom Server vorgegebene Zeichenfolge enthält, und von dieser Zeichenfolge ein Hash-Wert gebildet werden. Dieser Hash-Wert wird dann dem Server übermittelt und die Anmeldung des Benutzers mittels Kennwort ist gewährleistet.

Erfindungsgemäß wird dies dadurch erzielt, dass zur Ermittlung der auf den zentralen Server hochzuladenden Datenblöcke und der hochzuladenden Daten-Datenblock-Liste die folgenden Schritte für jeden unverschlüsselten Datenblock am Client ausgeführt werden:
- Generieren eines Datenblock-Schlüssels ausschließlich anhand des unverschlüsselten Datenblocks unter Verwendung einer Schlüsselgenerierungsvorschrift, sodass das Benutzer-Kennwort oder sonstige benutzerrelevanten Daten dafür nicht verwendet werden,
- Verschlüsseln des unverschlüsselten Datenblocks mit dem generierten Datenblock-Schlüssel in einen verschlüsselten Datenblock, unter Verwendung einer Verschlüsselungsvorschrift,
- Generieren eines eindeutigen Datenblock-ID-Wertes anhand des unverschlüsselten Datenblocks und gegebenenfalls der Informationsgewinnungs- und/oder Schlüsselgenerierungs- und/oder Verschlüsselungsvorschrift und Zuordnen dieses Datenblock-ID-Wertes zum verschlüsselten Datenblock unter Verwendung einer für den Benutzer vorgegebenen Datenblock-ID-Generierungsvorschrift,
- Übermitteln dieses eindeutigen Datenblock-ID-Wertes vom Client an den zentralen Server, um von diesem als Antwort zu bekommen, ob der diesem Datenblock-ID-Wert zugeordnete, verschlüsselte Datenblock am zentralen Server bereits vorhanden ist, und Hochladen des verschlüsselten Datenblocks sofern dieser noch nicht am zentralen Server vorhanden ist.
- Aufnehmen dieses eindeutigen Datenblock-ID-Wertes in die hochzuladende Daten-Datenblock-Liste,
- Aufnehmen des Datenblock-ID-Wertes und des Datenblock-Schlüssels in eine Datenblock-Schlüsselliste sofern dieser Datenblock-ID-Wert in der Datenblock-Schlüsselliste noch nicht vorhanden ist, wobei die Datenblock-Schlüsselliste Teil der Daten-Datenblock-Liste sein kann,
und dass unter Verwendung aller ermittelten, hochzuladenden Datenblöcke folgendes durchgeführt wird:
- Verschlüsseln der Daten-Datenblock-Liste mit einem Daten-Datenblock-Listenschlüssel, welcher unter Verwendung einer vom Benutzer verwalteten und nur ihm bekannten Daten-Datenblock-Listenschlüssel-Vorschrift generiert wird,
- Verschlüsseln der Datenblock-Schlüsselliste mit dem Benutzerschlüssel,
- Hinaufladen der verschlüsselten Daten-Datenblock-Liste und der verschlüsselten Datenblock-Schlüsselliste vom Client auf den zentralen Server,
wobei die unverschlüsselten Datenblöcke, die unverschlüsselte Daten-Datenblock-Liste, die unverschlüsselte Datenblock-Schlüsselliste sowie die generierten Datenblock-Schlüssel und der Benutzerschlüssel ausschließlich am Client verbleiben,
und wobei im Datenwiederherstellungsschritt der Server die auf ihm verschlüsselt gespeicherten und für den Server selbst nicht entschlüsselbaren Daten an den Client sendet, sodass die Datenwiederherstellung ausschließlich am Client stattfinden kann.

Die Reihenfolge der erfindungsgemäßen Schritte unterliegt keiner Einschränkung und kann im Rahmen der Möglichkeiten frei gewählt werden.

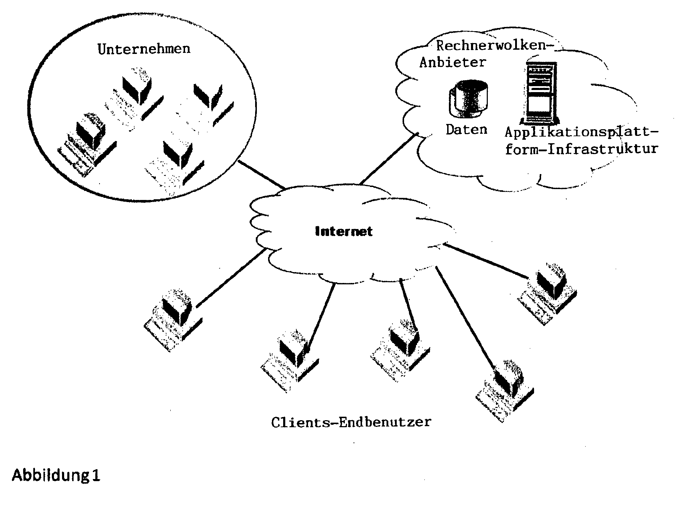

Nachfolgend wird das erfindungsgemäße Verfahren und seine Vorteile desselben anhand von Ausführungsbeispielen eingehend erläutert. Eine mögliche Anordnung von zentralem Server und Benutzern bzw. Clients ist in Fig.1 gezeigt.

Um das erfindungsgemäße Verfahren zu implementieren, wird von einem Zusammenspiel zwischen einem Server und einem Client ausgegangen.

Gemäß einer Ausführungsform der Erfindung legt der Server die Datenblöcke in Tabellen einer Datenbank ab, eine andere Ausführungsform kann das Speichern von Datenböcken in Dateien beinhalten, wobei der Datenblock-ID-Wert beispielsweise als Dateiname verwendet wird. Aufgrund der zu erwartenden hohen Anzahl an Datenblöcken sollte diese Lösung jedoch nicht bevorzugt werden.

Welcher Algorithmus für die Verschlüsselung herangezogen wird, ist für das Verfahren nicht von Bedeutung, solange der Algorithmus Block-Feedbacks unterstützt und als ausreichend sicher und schnell angesehen wird. Ein bevorzugter Verschlüsselungsalgorithmus ist sicher der AES, da dieser sehr gut analysiert und der Standard-Algorithmus in diesem Bereich ist.

Für die Berechnung von Hash-Werten kann ebenfalls jeder Algorithmus verwendet werden, der einen ausreichend langen, eindeutigen Hash-Wert hoch performant zurückliefert. In diesem Fall wird vorzugsweise einer der finalen SHA-3-Kandidaten verwendet, da diese sicherer und performanter sind als der SHA-2.

Beim erfindungsgemäßen Verfahren wird ein Schlüssel zur Verschlüsselung verwendet, welcher nur dem jeweiligen Benutzer bekannt ist. Dies kann vorzugsweise der Hash-Wert aus dem Benutzernamen und dem Kennwort des Benutzers sein, aber es kann auch jedes andere Verfahren verwendet werden, um auf einen Schlüssel zu kommen, der nur dem Benutzer bekannt ist. Dieser Schlüssel wird nachfolgend als Benutzer-Schlüssel bezeichnet.

Des Weiteren wird bei diesem Verfahren für jeden unverschlüsselten Datenblock ein Schlüssel generiert, welcher zumindest unter Zuhilfenahme des unverschlüsselten Datenblocks erhalten wird. Dieser Schlüssel wird nachfolgend Datenblock-Schlüssel genannt und stellt sicher, dass einzelne Datenblöcke ausschließlich dann richtig entschlüsselt werden können, wenn ein jeweiliger Benutzer schon vorher weiß bzw. gewusst hat, wie dieser Datenblock unverschlüsselt aussieht. Dies ermöglicht einerseits das öffentliche Bereitstellen der verschlüsselten Datenblocks und das Erkennen, welche Datenblocks bereits von einem beliebigen Benutzer erstellt und hinaufgeladen wurden. Gleichzeitig wird es einem Dritten praktisch unmöglich gemacht, den Inhalt bestimmter Datenblocks zu ermitteln, da dieser selbst keine Informationen über den Schlüssel besitzt.

Um die Sicherheit weiter zu erhöhen, wird die Daten-Datenblock-Liste ebenfalls verschlüsselt, genauso wie die Datenblock-Schlüsselliste. Diese beiden Listen werden mit dem Benutzer-Schlüssel verschlüsselt, da sie Dritten nicht bekannt sein dürfen. Der Benutzer selbst kann somit einfach ermitteln, welche Datenblöcke er benötigt, um eine konkrete Datei wiederherzustellen und sich diese entsprechend vom Server liefern lassen. Dies erfolgt durch den Benutzer anhand der Information in der Daten-Datenblock-Liste. Um die einzelnen verschlüsselten Datenblöcke wieder entschlüsseln zu können, liest der Benutzer die benötigten Schlüssel aus seiner Datenblock-Schlüsselliste aus und wendet jeden Schlüssel auf den entsprechenden Datenblock an.

Da sowohl die Verschlüsselung als auch die Entschlüsselung am Client und nicht auf dem Server erfolgt, besteht zu keiner Zeit die Notwendigkeit, den Server über einen der verwendeten Schlüssel zu informieren, also weder über den Benutzer-Schlüssel als über einen der Datenblock-Schlüssel.

Sind die verschlüsselten Datenblocks in einer möglichen Ausführungsform auf dem Server in einer Datenbank gespeichert, werden dort vorzugsweise zumindest folgende Tabellen und Spalten angelegt:
Tabelle **"Verschlüsselte Datenblocks":**
   *Spalte:* Verschlüsselter Datenblock
   *Spalte:* 256-Bit-Hash der des verschlüsselten Datenblocks (Primärschlüssel - die Berechnung dieser Spalte kann per Trigger automatisch erfolgen und verhindert Manipulationen durch Dritte beispielsweise mittels Falsch-Daten-Upload. Es kann auch ein Index auf eine Funktion wie z.B. SHA256 (Verschlüsselter Datenblock) gesetzt werden, wodurch 256 Bit für diese Spalte selbst wegfallen.
Tabelle **"Verschlüsselte** Benutzer-Dateien-Listen":
   *Spalte:* Kennzeichen, um welchen Benutzer es sich handelt (Indiziert mit Hash des Dateinamens, vorzugsweise ein ID-Wert, welcher zu einer Tabelle mit Hash von Benutzername, Kennwort, Zeichenfolge verknüpft)
   *Spalte:* Hash des Namens der Datei (indiziert mit der Benutzer-Kennzeichnung, optimaler Weise mit Benutzerschlüssel verschlüsselt, da der Benutzer den Dateinamen auf seinem Client verschlüsselt und ihn so jederzeit am Server über den Index wiederfinden kann. Wird der Dateinamen mit dem Schlüssel des Herstellers verschlüsselt, ist der Schutz gegenüber dritten nicht mehr gewährleistet)
   *Spalte:* Name der Datei (optimaler Weise verschlüsselt, vollständig mit Verzeichnispfad)
   *Spalte:* Auflistung der Datenblock-ID-Werte (mit Benutzer-Schlüssel verschlüsselt)
   *Spalte:* Hinweis auf die Dateiversion (vorzugsweise Datum des Uploads der Datei, somit kann anhand des letzten Datums einer Datei erkannt werden, welches die letzte Version ist - nur benötigt, sofern Versionskontrolle angeboten wird)
   *Spalte:* Datei-Hash (zur schnellen Kontrolle, ob diese Datei verändert wurde und zur Kontrolle, ob die Datei richtig wiederhergestellt wurde)
Tabelle **"Datenblock-Schlüsselliste":**
   *Spalte:* Kennzeichen, um welchen Benutzer es sich handelt
   *Spalte:* Datenblock-ID-Wert (Indiziert, mit Benutzer-Schlüssel verschlüsselt)
   *Spalte:* Datenblock-Schlüssel (mit Benutzer-Schlüssel verschlüsselt)
Tabelle **"Benutzer":**
   *Spalte:* Eindeutiges Kennwort des Benutzers
   *Spalte:* Benutzer-Zugangsdaten (*indiziert,* z.B. *Hash von Benutzername, Kennwort, Zeichenfolge-verknüpft mit Tabelle "Verschlüsselte Benutzer-Datei-Listen")*
   *Spalten:* Weitere Benutzer-Informationen (Nachname, Vorname, Verfügbarer Speicherplatz, ... - vorzugsweise verschlüsselt mit einem Schlüssel, welcher nur dem Server und dessen Betreiber bekannt ist)

Die vorstehende beschriebene Ausführungsform ist nur eine von vielen möglichen. Diese Ausführungsform bietet folgende Vorteile:
1. Die Daten werden nicht redundant gespeichert, es wird daher ein Minimaler Speicherplatz belegt.
2. Die Daten sind in einer Form gespeichert, dass sie sehr gut für Erweiterungen und weitere Ausführungen dieser Erfindung geeignet sind - wie nachfolgend gezeigt wird.
3. Die Serverbelastung beschränkt sich auf die Beantwortung von SQL-Anfragen und das Einfügen von Daten in Tabellen. Der Server muss keine Benutzer-Daten zwischenspeichern, da durch die Tabelle "Benutzer" mittels einer SQL-Anfrage ein JOIN auf die Tabelle "Verschlüsselte Benutzer-Datei-Listen" ausgeführt werden kann.

Eine alternative Ausführungsform für ein Datenmodell auf dem Server ist, die Tabelle "Verschlüsselte Benutzer-Dateien-Listen" um die Spalte "Datenblock-Schlüssel" zu erweitern, wodurch die Tabelle "Datenblock-Schlüsselliste" entfällt. Diese Ausführungsform bietet minimale Vorteile, da ein JOIN auf zwischen diesen beiden Tabellen über den Datenblock-ID-Wert wegfällt. Nachteilig wirkt sich aus, dass die zu speichernden Datenmengen und gleichzeitig auch der Datentransfer zwischen Client und Server stark ansteigen. Eine Komprimierung der Spalte "Auflistung der Datenblock-ID-Werte" ergibt in diesem Fall auch in keiner weiteren Ausführungsform mehr Vorteile.

Als weitere alternative Ausführungsform kann die Spalte "Auflistüng der Datenblock-ID-Werte" in der Tabelle "Verschlüsselte Benutzer-Dateien-Listen" anstatt als eine binäre Zeichenfolgen-Auflistung der Datenblock-ID-Werte auch als ein Datensatz je Datenblock-ID-Wert einer Datei gespeichert werden. Auch diese Ausführungsform bietet keine Vorteile aber einige Nachteile.

Dem Fachmann sind noch weitere Möglichkeiten bekannt, deren Vor- und Nachteile besonders in Bezug auf die aktuellen Anforderungen abzuwägen sind, um in einem konkreten Fall das optimalste Datenmodell auszuwählen.

Wird der Dateiname optimaler Weise bei jedem Vorkommen anders verschlüsselt gespeichert, kann ein Hash des unverschlüsselten Dateinamens ebenfalls als zusätzliche Spalte aufgenommen werden, um bei der Versionskontrolle für eine Datei serverseitig ohne Kenntnis eines Schlüssels ermöglichen zu können. Gleiches Prinzip sollte für möglichst viele Spalten möglichst aller Tabellen gelten. Somit sind alle eine Datei betreffenden Informationen am Server gänzlich verschlüsselt und für niemanden von Nutzen außer für den Benutzer, welche die jeweilige Datei erstellt hat.

Jeder Benutzer hat einen Benutzernamen und ein Kennwort. Das Kennwort wird in der Cloud nicht gespeichert, optimaler Weise auch nicht der Benutzername. Als eine Ausführungsform kann ein 256-Bit Hash der folgenden Information am Server gespeichert werden: Benutzername plus Benutzerkennwort plus eine Konstante Zeichenfolge. Somit lassen sich sowohl Benutzer als auch sein Kennwort eindeutig identifizieren, um eine Verzeichnis- und Dateiliste für den Benutzer liefern zu können.

Um verschlüsselte, auf den Server gespeicherte Datenblöcke als unverschlüsselte Daten bzw. Dateien auf seinen Client zu bekommen, werden folgende Schritte in vorzugsweise dieser Reihenfolge in am Client ausgeführt:
1. Holen der verschlüsselten Datenblock-Dateiliste für die entsprechende Datei vom Server
2. Entschlüsseln der Datenblock-Dateiliste mit dem Benutzer-Schlüssel
3. Holen der Datenblocks in dieser Liste anhand der Datenblock-ID-Werte aus der entschlüsselten Datenblock-Dateiliste vom Server
4. Holen der verschlüsselten Datenblock-Schlüsselliste vom Server und entschlüsseln derselben mit dem Benutzer-Schlüssel
5. Entschlüsseln der verschlüsselten Datenblocks mit den zugehörigen Datenblock-Schlüsseln der Datenblock-Schlüsselliste.
6. Aneinanderhängen der unverschlüsselten Datenblocks und unter dem gewünschten Dateinamen entweder im Arbeitsspeicher oder auf der Festplatte ablegen.

Will der Benutzer sein Kennwort ändern obwohl er bereits Daten auf dem Server gespeichert hat, bleibt das zuerst erstellte Kennwort erhalten, wird aber mit dem neuen Kennwort verschlüsselt - als eine Ausführungsform. Alternativ können die Daten-Datenblock-Liste und die Datenblock-Schlüsselliste neu verschlüsselt werden.

Die verschlüsselten Datenblocks selbst müssen nicht neu verschlüsselt werden, da jeder Datenblock seinen eigenen Schlüssel besitzt.

Es ist eine Ausführungsform, dass eine einmal geholte oder direkt am Client erstellte Daten-Datenblock-Liste am Client behalten wird und die Datenblock-Schlüsselliste ebenfalls. Somit fällt ein Round-Trip zum Server weg. Werden Dateien eines Benutzers auf unterschiedlichen Clients bearbeitet und synchronisiert, werden ausschließlich die fehlenden bzw. geänderten Einträge der Daten-Datenblock-Liste und der Datenblock-Schlüsselliste vom Server geholt. Die Liste wird entsprechend nur um auf anderen Clients geänderte Einträge ergänzt bzw. geändert.

Eine Änderung eines Datenblocks auf einem Client kann auf einem anderen Client leicht festgestellt werden, indem die Daten-Datenblock-Liste mit dem Server abgeglichen wird. Es kann ebenfalls anhand des Gesamt-Datei-Hash-Wertes bzw. des Gesamt-Daten-Hash-Wertes leicht abgeglichen werden, ob sich eine Datei überhaupt geändert hat und in Blöcke zerlegt werden muss.

Eine Ausführungsform ist, dass der Hash-Wert der verschlüsselten Daten-Datenblock-Liste gebildet und zum Server gesendet wird, um direkt festzustellen, ob eine Datei geändert wurde. Ebenfalls ist es möglich, den Hash einer gesamten, unverschlüsselten Datei, welcher mitunter leicht modifiziert wird, auf den Server zu speichern, da somit sehr schnell erkannt werden kann, ob eine Datei geändert wurde, noch bevor eine Datei in Datenblöcke zerlegt wird. Insofern wird beispielsweise die Tabelle Daten-Datenblock-Liste um eine Spalte erweitert, welche den beschrieben Hash-Wert der unverschlüsselten Datei enthält. Dieser Hash-Wert kann sowohl verschlüsselt als auch unverschlüsselt am Server gespeichert werden, da aus diesem Wert keine Information gewonnen werden kann. Wird der Hash-Wert nicht verschlüsselt, kann der Client direkt den Server fragen, indem er den Hash-Wert hinauflädt; ist der Hash-Wert verschlüsselt, muss der verschlüsselte Hash-Wert zuerst auf den Client geladen und auf diesem entschlüsselt werden.

Trotzdem bietet die Verschlüsselung sogar dieses Hash-Wertes den Vorteil, dass bei Wiederherstellen eine Datei durch Dritte - z.B. durch Erraten der einzelnen Datenblock-Schlüssel oder durch den Versuch, eine identische Datei nachzubauen-nicht verifiziert werden kann, ob dies genau die Datei ist, die der Benutzer tatsächlich gespeichert hat.

Der Fachmann wird in einer Ausführungsform nur jene Einträge der Daten-Datenblock-Liste und der Datenblock-Schlüsselliste zum Server hinaufladen, von welchen er feststellen kann, dass sich diese geändert haben.

Es ist eine Ausführungsform, den gesamten verschlüsselten Datenblock immer auf den Server hinaufzuladen, um zu prüfen, ob dieser bereits auf dem Server vorhanden ist, und falls dies nicht der Fall ist, kann dieser gleich vom Server gespeichert werden. In diesem Fall wäre der Daten-Datenblock-ID-Wert identisch mit dem verschlüsselten Datenblock selbst. Diese Ausführungsform wird nur der Vollständigkeit wegen erwähnt und sollte in der Praxis keine Anwendung finden.

Zusammenfassend gilt, dass je frei wählbarer Blockgröße insgesamt:
Client seitig: 256 Bit Hash unverschlüsselter Block + 256 Bit Hash des verschlüsselter Block
Server-seitig 256 Bit Hash des Verschlüsselter Block (indiziert)
   - also insgesamt ca. 1024 zusätzlich anfallen.

Die Blockgröße ist abzuwägen, ein sinnvoller Wert könnte zwischen 8 KB und 16 KB liegen, da die Wahrscheinlichkeit, gleiche Blöcke zu finden, doch relativ groß scheint.

Der Overlay liegt in diesen Fällen zwischen ca. 0.08% bzw. ca. 0.04% - im Gegensatz dazu liegt die Kompressionsrate bei einem Faktor von zwischen 12,8 und 25,6.

Eine weitere Ausführungsform kann sein, dass der Server bei Auffinden bzw. beim Neu-Anlegen eines komprimierten, verschlüsselten Datenblocks einen eindeutigen ID-Wert für diesen Block zurückliefert. Das mache eine neue, indizierte Spalte mit dem ID-Wert in der Tabelle 1 erforderlich und anstatt des HASH wird die Block-ID in die Datei-Zusammensetzung geschrieben.

Das hat den Vorteil, dass nicht mehr 256 Bit je Block für den Benutzer erforderlich sind, sondern nur mehr 64 Bit oder maximal 128 Bit. Die zusätzlichen Speicherkosten in der Tabelle 1 rentieren sich, sobald ein Block drei Mal oder mehr vorkommt. (File-Versionen)

Eine Manipulation durch externe Benutzer ist weiterhin ausgeschlossen, da die ID-Werte ausschließlich am Server generiert und dem Client nur auf Anfrage zugesendet werden.

Eine weitere Ausführungsform kann sein, dass die Blöcke nicht in der Reihenfolge beim Server abgefragt werden, in der sie vorkommen, sondern in einer Zufälligen oder in einer sortierten Reihenfolge.

Das erfordert zwar mehr Speicher am Client (da die Blöcke behalten werden müssen, bis sie einzeln abschlossen sind), verschleiert aber die Zusammensetzung der Datei noch mehr - da man nicht einmal mehr weiß, in welcher Reihenfolge die Blöcke in der Datei zusammengesetzt sind.

Eine weitere Ausführungsform kann sein, dass der Client sich lokal jene Blöcke speichert, die er jemals generiert hat bzw. von denen er anderswoher weiß, dass sie existieren (z.B. in einer lokalen SQLite Datenbank). Damit werden wiederum Round-Trips zum Server gespart und es wird wiederum noch weniger Information bekannt gegeben.

Eine weitere Ausführungsform kann sein, dass z.B. die ersten x Bit (z.B. die ersten 128 Bit) jedes Blocks weggelassen und nur in der Datei-Block-Liste angehängt werden.

Das zusammen mit den ID-Werten für Hash-Blocks macht es wieder sinnvoll, die Datei-Block-Liste zu komprimieren (da ja nicht nur Hash-Werte vorkommen)

Das kostet zwar wieder mehr Speicher je Datei-Block eines Benutzers (durch Kompression verkleinerbar), (Overlay: 16 Bytes komprimiert mehr, dafür beim Block weniger, Trefferwahrscheinlichkeit höher für gleiche Blocks etwas höher, -> praktisch 0 ...) bietet aber wiederum einige Vorteile:
1. Die komprimierten, verschlüsselten Blocks werden wieder um ein paar Bytes verkleinert, wodurch sich die Wahrscheinlichkeit weiters erhöht, gleiche Blöcke beim gleichen oder bei unterschiedlichen Benutzern zu finden.
2. Sollte ein Block in unverschlüsselter Weise bereits bekannt sein (da dieser Block als Quell-Text bekannt ist) - fehlen immerhin noch 16 Bytes je Block, für die es keine Informationen gibt, da diese ja mit dem Benutzer-Schlüssel verschlüsselt sind.

Bei einer 1-MB Datei und 16 KB Blockgröße sind immerhin 16 * 64 Bytes = 1 KB vollkommen unbekannt (0.1% der Gesamt-Datei) - es kann also nie zu 100% unterstellt werden, dass genau diese Datei verwendet wurde.

Eine weitere Ausführungsform ist, dass nicht fix die ersten 16 Bytes aus dem Block entfernt werden, sondern von den 16384 Bytes (16KB) sondern eine beliebige Stelle von 256 (oder andere Anzahl) möglichen Stellen (1 Byte für die Position, an der entfernt wurde - bestimmt jedesmal per Zufallsgenerator).

Vorteil: Dieses Entfernen von beliebigen Stellen im Block und extra speichern hat den großen Vorteil, dass man nicht einmal weiß, von welcher Stelle genau entfernt wurde.

Nachteil: bis zu 1 Byte mehr Speicher je Datei-Block (da komprimiert)die Wahrscheinlichkeit, gleiche Blocks zu finden, wird dadurch verringert, da gleiche Source-Blocks auf bis zu 256 Arten aufgeteilt werden können (oder andere Anzahl).

Aufgrund der Vielfalt an Möglichkeiten stehen dem Fachmann noch andere Ausführungsformen und Verbesserungen zu Verfügung, die hier nicht alle aufgelistet werden.

Empfohlen wird, dass nicht einmal der Benutzername am Server gespeichert wird, sondern nur dessen Hash-Wert.

In der nachfolgenden Tabelle ist in beispielhafter Zusammenstellung die Ausführung von Schritten des erfindungsgemäßen Verfahrens dargestellt.

**Aktionsfolge für das Übertragen von Daten an den Server**

| | **Client** | | | | **Server/Cloud** | |
|---|---|---|---|---|---|---|
| | | | | | | |

| Schritt Nr. | Bezogen auf | Aktion am Client | Aktion am Client Ausführungsformen | Anmerkungen, Details | Aktion am Server | Beispiel |
|---|---|---|---|---|---|---|
| | | | | | | |
| 1 | gesamte Daten (Datei) | | | Initialierung: Daten-Datenblock-Liste für diese Datei leeren | | Eine Datei mit z.B. 100 KB |
| 2 | gesamte Daten (Datei) | Teile Daten in Datenblöcke vorgegebener Größe | | Es können auch mehrere Größen auswählbar sein | | z.B. 10 * 10 KB-Datenblöcke |
| 3 | optional jeden Datenblock | Komprimiere den Datenblock | | | | z.B. 10 KB werden zu 5 KB |
| 4 | optional jeden Datenblock | Generieren einer SchlüsselbasisInformation anhand des unverschlüsselten Datenblocks unter Verwendung einer Informationsgewinnun gs-vorschrift | wenn Schritt 3, alternativ: Komprimierten Datenbllock und/oder nach einem vorgegebenen System veränderten Datenblock als Basis einer Informationsgewinnu ngsvorschrift | Ermöglicht kleine Werte zur Speicherung der Enschlüsselungs-Informationen-optional mehrere Informationsgewinnungsvorschriften auswählbar, konkrete Informationsgewinnungsvorschrift wird mit Zufallsgenerator jedes Mal neu festgelegt | | z.B. 128-Bit-Anteil des Skein-Hash des unverschlüsselten Datenblocks = z.B. "UVWXYZ0987654321", Hash des komprimiertes Blocks ist schneller, da Blockgröße kleiner und besser, da Quelltext für Brute-Force nicht unmittelbar bekannt ist - aber Komprimierungsergebnis schaut bei gleichen Daten nicht immer zwingend gleich aus |
| 5 | wenn Schritt 4 - jeden Datenblock | Generieren eines Datenblock-Schlüssels anhand der generierten Schlüsselbasis-Information unter Verwendung einer Schlüsselgenerierungs vorschrift | Es kann eine gewollte Verlangsamung in diesem Schritt eingebaut werden, um die Schlüsselbasis-Information zu stärken. | Die Schlüsselgenerierungs-vorschrift ist aus einer vorbestimmbaren Anzahl von Schlüsselgenerierungs-vorschriften auswählbar | | um auf einen 256 Bit Schlüssel zu kommen, den Weg aber zu verlangsamen, um die 128 Bit Schlüsselsbasis-Information zu stärken: SHA256(SHA512(SHA512(SHA512 (SHA512(Schlüsselbasis-Information) +'A') +'BC') + 'DEF') + 'Z') z.B. = "werfufng9otrilekU5util128exs2lpy" |
| 6 | wenn nicht Schritt 4-jeden Datenblock | Generieren eines Datenblock-Schlüssels anhand des unverschlüsselten Datenblocks unter Verwendung einer Schlüsselgenerierungs vorschrift | wenn Schritt 3 kann die Schlüsselgenerierun gsvorschrift auch auf den komprimierten Datenblock verweisen | Die Schlüsselgenerierungs-vorschrift ist aus einer vorbestimmbaren Anzahl von Schlüsselgenerierungs-vorschriften auswählbar | | z.B. Skein256(unverschlüsselter Datenblock) SHA3-Kandidaten sind schneller als SHA2 = z.B. "+Z(9)S" |
| 7 | wenn Schritt 3 - jeden Datenblock | Verschlüsseln des komprimiertend Datenblocks mit dem generierten Datenblock-Schlüssel in einen verschlüsselten Datenblock unter Verwendung einer Verschlüsselungsvorsc hrift | | Die Verschlüsselungsvorschrift ist aus einer vorbestimmbaren Anzahl von Verschlüsselungs-vorschriften auswählbar | | z.B. AES256(komprimierter Datenblock) mit Datenblock-Schlüssel und CFB |
| 8 | wenn nicht Schritt 3 - jeden Datenblock | Verschlüsseln des unverschlüsselten Datenblocks mit dem generierten Datenblock-Schlüssel in einen verschlüsselten Datenblock unter Verwendung einer Verschlüsselungsvorsc hrift | | Die Verschlüsselungsvorschrift ist aus einer vorbestimmbaren Anzahl von Verschlüsselungs-vorschriften auswählbar | | z.B. AES256(unverschlüsselter Datenblock) mit Datenblock-Schlüssel und CFB |
| 9 | jeden Datenblock | Generieren eines eindeutigen Datenblock ID-Wertes anhand des unverschlüsselten Datenblocks und der ausgewählten Inforamtionsgewinnun gs-, Schlüsselgenerierungs und/oder Verschlüsselungsvorsc hrift und Zuordnen des generierten Datenblocks ID-Wertes zum verschlüsselten Datenblock unter Verwendung einer für den Benutzer vorgegebenen Datenblock-ID-Generierungsvorschrift | Generieren eines eindeutigen Datenblock ID-Wertes anhand des verschlüsselten Datenblocks (Schließt spätere Maniuplationen durch gefälschte Uploads auf den Server auf) als Datenblock-ID-Generierungsvorschrift | Wird der Datenblock-ID-Wert anhand des unverschlüsselten Datenblocks generiert, kann dies vom Server nicht validiert werden und der Server muss allen Benutzer vertrauen - Benutzer können verschlüsselten Datenblöcken somit falsche Datenblock-ID-Werte zuweisen und somit andere Benutzer schädigen | | z.B. Skein256(verschlüsselter Datenblock) SHA3-Kandidaten sind schneller als SHA2 - z.B. "1234567890ABCDEFGHIJKLMNOPQRST UV" |
| 9 | jeden Datenblock | Übermitteln dieses eindeutigen Datenblock-ID-Wertes an den Server | | dies sollte über eine verschlüsselte Leitung übertragen werden - Übertragene Information sollte minimal sein | | z.B. "? " + Datenblock-ID-Wert-"?1234567890ABCDEFGHIJKLMNOPQRSTU V" |
| 10 | jeden Datenblock | | | Der Server kann wie in Anspruch 1 auch JA bzw. NEIN als Antwort liefern, dann bleibt der Datenblock-ID-Wert in den nächsten Schritten beim Client uverändert - Vorteil des höchgezählten Datenblock-ID-Wertes sind nachfolgend kleinere und komprimierbare Datenblock-ID-Werte | Überprüfen ob der dem Datenblock-ID-Wert zugehörige, verschlüsselte Datenblock am Server bereits vorhanden ist und Rückantwort an Client | z.B. RETURN "SELECT "Hochgezählter Datenblock-ID-Wert" FROM 'Verschlüsselte Datenblocks' WHERE "Hash_Verschlüsselter Datenblock' =" + Datenblock-ID-Wert |
| 11 | jeden Datenblock | Überprüfen Rückantwort des Servers und Hochladen des verschlüsselten Datenblocks sofern dieser noch nicht am Server vorhanden ist | | | | z.B. nur wenn zurückgelieferter Wert des Servers = 0: verschlüsselten Datenblock hochladen |
| 12 | | | | zurückliefern des Hochgezählten Datenblock-ID-Wertes an den Client aus Bestätigung, dass der Vorgang abgeschlossen ist | Nochmaliges prüfen des Hash-Wertes des Datenblocks (Doppelte Uploads können vom Benutzer vkommen) Speichern des verschlüsselten Datenblocks | z.B. In der Datenbank oder im Dateisystem ablegen. Im ersten Fall werden entsprechende SQL-Anweisungen ausgeführt (Insert Into ...) |
| 13 | | Aufnehmen des eindeutigen Datenblock-ID-Wertes in die hochzuladende Daten-Datenblock-Liste | optional: Der Datenblock-ID-Wert wird mit dem Hochgezählten Datenblock-ID-Wert, welcher vom Server rückgeliefert wird, ersetzt | | | z.B. binärer Datenblock-ID-Wert "1234567890ABCDEFGHIJKLMNOPQRST UV" wird ersetzt durch den Zahlenwert 4567, welcher vom Server geliefert wurde - > DatenblockListe 4567 am Ende anfügen |
| 14 | wenn Schritt 4 - jeden Datenblock | Aufnehmen des Datenblock-ID-Wertes und der Schlüsselbasis-Information in eine Datenblock-Schlüsselliste, welche Teil der Daten-Datenblock-Liste sein kann - sofern noch nicht in dieser Liste vorhanden | Der Schlüsselbasis-Information ist ein Teil der Daten-Datenblock-Liste (wird z.b. hinter jeden Datenblock-ID-Wert angehängt) | Vorzugsweise wird der vom Client errechnete Hash-Wert des verschlüsselten Datenblocks auch in diese Liste aufgenommen, da danach mit dieser Liste am Client vorverglichen werden kann und somit bereits bekannte Datenblöcke nicht mehr am Server auf Existenz geprüft werden müssen. | | z.B. ..., 4567-UVWXYZ0987654321, ... Datenblock-ID-Wert wurde durch den vom Server zurückgelieferten Wert ersetzt |
| | wenn nicht Schritt 4 - jeden Datenblock | Aufnehmen des Datenblock-ID-Wertes und des Datenblock-Schlüssels in eine Datenblock-Schlüsselliste, welche Teil der Daten-Datenblock-Liste sein kann - sofern noch nicht in dieser Liste vorhanden | Der Datenblock-Schüssel ist ein Teil der Daten-Datenblock-Liste (wird z.b. hinter jeden Datenblock-ID-Wert angehängt) | Vorzugsweise wird der vom Client errechnete Hash-Wert des verschlüsselten Datenblocks auch in diese Liste aufgenommen, da danach mit dieser Liste am Client vorverglichen werden kann und somit bereits bekannte Datenblöcke nicht mehr am Server auf Existenz geprüft werden müssen. | | z.B..:., 1234567890ABCDEFGHIJKLMNOPQRSTU V - 58thglifewe8fdmnre539128wialqwy<, ... z.B. Der Server liefert nur JA/NEIN, daher muss ursprünglich berechnete Datenblock-ID-Wert gespeichert werden |
| | | | | Schleife 3 bis 14 für alle Datenblöcke | | |
| | | | | | | |
| 15 | | Verschlüsseln der Daten-Datenblock-Liste mit einem Daten-Datenblock-Listenschlüssel, welcher unter Verwendung einer vom Benutzer verwalteten und nur ihm bekannten Daten-Datenblock-ListenschlüsselVorschrift generiert wird. | Der Daten-Datenblock-ListenSchlüssel wird entweder je Daten-Datenblock-Liste unterschiedlich berechnet oder es wird je Daten-Datenblock-Liste ein Initialisierungsvektor verwendet | Der Vorteil durch die Ausführungsformen ist, dass Dritte bei jeden Daten-Datenblock-Listen, welche historisiert werden und bei welchen sich nur einer der hinteren Datenblöcke ändert, in keiner Weise ersichtlich ist, ab weichem Datenblock-ID-Wert die erste Änderung, Löschung oder Einfügung stattgefunden hat. | | Input-Vektor oder Basis für einen Daten-Datenblock-Listenschlüssel ist z.B. das aktuelle und am Server gespeicherte Änderungsdatum der jeweiligen Daten-Datenblock-Liste |
| 16 | | Verschlüsseln der Datenblock-Schlüsselliste mit dem Benutzerschlüssel | | Es ergibt sich hier kein Mehrwert durch das Verwenden von Initialisierungs-Vektoren oder von unterschiedichen Schlüsseln, da es keine Historisierung gibt | | |
| 17 | | Hinaufladen der verschlüsselten Daten-Datenblock-Liste und der verschlüsselten Datenblock-Schlüsselliste vom Client auf den zentralen Server | | Die unverschlüsselten Datenblockblöcke, die unverschlüsselte Daten-Datenblock-Liste, die unverschlüsselte Datenblock-Schlüsselliste sowie die generierten Datenblock-Schlüssel, der Benutzerschlüssel und die Daten-Datenblock-Listenschlüssel-Vorschrift und sofern generiert, die Schlüsselbasis-Information verbleiben ausschließlich am Client | | |
| 18 | | | | die Datenblock-Schlüsselliste kann in der Tabelle "Datenblock-Schlüsselliste" als ein Datensatz je unterschiedlichem Datenblock abgelegt werden | Speichern der verschlüsselten Daten-Datenblock-Liste und der verschlüsselten DatenblockSchlüsselliste | z.B. eine Dateiversion ist eine Zeile in der "Verschlüsselte Benutzer-Dateien-Listen"-Tabelle, die Daten-Datenblock-Liste wird als verschlüsselte Textspalte gespeichert |

## Patentansprüche

1. Verfahren zur Speicherung von Daten auf einem zentralen Server, wobei es eine Vielzahl an Benutzern mit jeweils einem Benutzer-Kennwort gibt, welches zumindest für die Bildung eines Benutzer-Schlüssels verwendet wird, und zumindest einigen dieser Benutzer zumindest jeweils ein Client mit darauf gespeicherten Daten zugeordnet ist und zumindest Teile dieser Daten je nach Bedarf in zumindest einen hochzuladenden Datenblock zerlegt werden und je Datenblock anhand eines für diesen eindeutigen Datenblock-ID-Wertes abgeglichen wird, ob ein übereinstimmender Datenblock bereits am Server vorhanden ist und die dort nicht vorhandenen Datenblöcke auf den zentralen Server geladen werden und wobei eine hochzuladende Daten-Datenblock-Liste erstellt und auf den zentralen Server geladen wird, anhand welcher bei Datenanforderung der am zentralen Server abgelegten Daten durch den Benutzer diese Daten wieder in einem Datenwiederherstellungsschritt in ursprünglicher Form generiert werden können, **dadurch gekennzeichnet,**
**dass** zur Ermittlung der auf den zentralen Server hochzuladenden Datenblöcke und der hochzuladenden Daten-Datenblock-Liste die folgenden Schritte für jeden unverschlüsselten Datenblock am Client ausgeführt werden:
Generieren eines Datenblock-Schlüssels ausschliesslich anhand des unverschlüsselten Datenblocks unter Verwendung einer Schlüsselgenerierungsvorschrift, sodass das Benutzer-Kennwort oder sonstige benutzerrelevanten Daten dafür nicht verwendet werden,
Verschlüsseln des unverschlüsselten Datenblocks mit dem generierten Datenblock-Schlüssel in einen verschlüsselten Datenblock, unter Verwendung einer Verschlüsselungsvorschrift,
Generieren eines eindeutigen Datenblock-ID-Wertes anhand des unverschlüsselten Datenblocks und gegebenenfalls der Informationsgewinnungs- und/oder Schlüsselgenerierungs- und/oder Verschlüsselungsvorschrift und Zuordnen dieses Datenblock-ID-Wertes zum verschlüsselten Datenblock unter Verwendung einer für den Benutzer vorgegebenen Datenblock-ID-Generierungsvorschrift,
Übermitteln dieses eindeutigen Datenblock-ID-Wertes vom Client an den zentralen Server, um von diesem als Antwort zu bekommen, ob der diesem Datenblock-ID-Wert zugeordnete, verschlüsselte Datenblock am zentralen Server bereits vorhanden ist, und Hochladen des verschlüsselten Datenblocks sofern dieser noch nicht am zentralen Server vorhanden ist,
Aufnehmen dieses eindeutigen Datenblock-ID-Wertes in die hochzuladende Daten-Datenblock-Liste,
Aufnehmen des Datenblock-ID-Wertes und des Datenblock-Schlüssels in eine Datenblock-Schlüsselliste sofern dieser Datenblock-ID-Wert in der Datenblock-Schlüsselliste noch nicht vorhanden ist, wobei die Datenblock-Schlüsselliste Teil der Daten-Datenblock-Liste sein kann,
und **dass** unter Verwendung aller ermittelten, hochzuladenden Datenblöcke folgendes durchgeführt wird:
Verschlüsseln der Daten-Datenblock-Liste mit einem Daten-Datenblock-Listenschlüssel, welcher unter Verwendung einer vom Benutzer verwalteten und nur ihm bekannten Daten-Datenblock-Listenschlüssel-Vorschrift generiert wird,
Verschlüsseln der Datenblock-Schlüsselliste mit dem Benutzerschlüssel,
Hinaufladen der verschlüsselten Daten-Datenblock-Liste und der verschlüsselten Datenblock-Schlüsselliste vom Client auf den zentralen Server,
wobei die unverschlüsselten Datenblöcke, die unverschlüsselte Daten-Datenblock-Liste, die unverschlüsselte Datenblock-Schlüsselliste sowie die generierten Datenblock-Schlüssel und der Benutzerschlüssel ausschließlich am Client verbleiben,
und wobei im Datenwiederherstellungsschritt der Server die auf ihm verschlüsselt gespeicherten und für den Server selbst nicht entschlüsselbaren Daten an den Client sendet, sodass die Datenwiederherstellung ausschließlich am Client stattfinden kann.

2. Verfahren nach Anspruch 1, **dadurch gekennzeichnet, dass** der Datenblock-Schlüssel ein Hash-Wert des unverschlüsselten Datenblocks ist.

3. Verfahren nach Anspruch 1 **dadurch gekennzeichnet, dass** eine Schlüsselbasis-Information anhand des unverschlüsselten Datenblocks unter Verwendung einer Informationsgewinnungsvorschrift generiert wird und der Datenblock-Schlüssel ausschließlich aus dieser Schlüsselbasis-Information generiert wird, wobei vorzugsweise ein ausreichend langer, vorbestimmter Anteil eines Hash-Wertes des unverschlüsselten Datenblocks herangezogen wird und weiters vorzugsweise die Schlüsselbasis-Information anstatt des Datenblock-Schlüssels in die Datenblock-Schlüsselliste eingetragen wird.

4. Verfahren nach Anspruch 1 oder 3, **dadurch gekennzeichnet, dass** der Datenblock-Schlüssel aus der Datenschlüssel-Information dadurch gebildet wird, dass der Datenblock-Schlüssel aus einer vorbestimmten Anzahl an Hash-Bildungszyklen beginnend mit dem Hash-Wert der Datenschlüssel-Information gebildet wird, wobei der Hash-Wert des jeweils vorhergehenden Hash-Zyklus als neuer Ausgangs-Hash-Wert verwendet werden.

5. Verfahren nach vorhergehenden Ansprüche, **dadurch gekennzeichnet, dass** der unverschlüsselte Datenblock zuerst komprimiert wird und danach mit dem Datenblock-Schlüssel verschlüsselt wird.

6. Verfahren nach Anspruch 5, **dadurch gekennzeichnet, dass** der Datenblock-Schlüssel ein Hash-Wert des komprimierten Datenblocks ist.

7. Verfahren nach Anspruch 5, **dadurch gekennzeichnet, dass** die Schlüsselbasis-Information als ein ausreichend langer definierter Anteil eines Hash-Wertes des komprimierten Datenblocks ist und aus diesem Hash-Wert der tatsächliche Datenblock-Schlüssel berechnet wird.

8. Verfahren nach einem der vorhergehenden Ansprüche, **dadurch gekennzeichnet, dass** der Datenblock-ID-Wert dem Hash-Wert des Hash-Wertes des unverschlüsselten Datenblocks entspricht.

9. Verfahren nach einem der Ansprüche 1 bis 7, **dadurch gekennzeichnet, dass** der Datenblock-ID-Wert dem Hash-Wert des verschlüsselten Datenblocks entspricht.

10. Verfahren nach einem der vorhergehenden Ansprüche, **dadurch gekennzeichnet, dass** der Datenblock-ID-Wert an den Server gesendet wird und der Server zurückmeldet, ob der entsprechende Datenblock bereits existiert oder hochgeladen werden muss, und dass der Server für jeden Datenblock-ID-Wert eine von ihm vergebene, für diesen Datenblock-ID-Wert eindeutige Zahl an den Client zurückliefert, wo diese als neuer Datenblock-ID-Wert in die Daten-Datenblock-Liste und in die Datehblock-Schlüsselliste eingetragen wird und für den Datenwiederherstellungsschritt verwendet wird.

11. Verfahren nach einem der vorhergehenden Ansprüche, **dadurch gekennzeichnet, dass** die Datenblock-ID-Werte, anhand welcher festgestellt werden, ob die entsprechenden Datenblöcke bereits auf dem Server vorhanden sind, zuerst alle auf dem Client gebildet werden und danach in zufälliger Reihenfolge an den Server für diese Anfrage gesendet werden.

12. Verfahren nach einem der Ansprüche 1 bis 11, **dadurch gekennzeichnet, dass** von jedem unverschlüsselten Datenblock eine variable Anzahl an Bytes von einer variablen Position in diesem entfernt werden und der Daten-Datenblock-Liste zusammen mit der Information, wie viele Bytes und an welcher Position diese entfernt wurden, als zusätzliche Informationen für jeden Datenblock angefügt werden.

13. Verfahren nach einem der vorhergehenden Ansprüche, **dadurch gekennzeichnet, dass** für die Verschlüsselung der Daten-Datenblock-Liste ein Wert, der für diese Daten-Datenblock-Liste unveränderlich ist und öffentlich bekannt sein kann, als Basis für die Berechnung des Initialisierungs-Vektors für ein Chaining-Verfahren bei der Verschlüsselung verwendet wird.

14. Verfahren nach einem der vorhergehenden Ansprüche, **dadurch gekennzeichnet, dass** die Daten-Datenblock-Liste mit zufälligen extra gekennzeichneten, ansonsten irrelevanten Daten variabler Länge erweitert wird.

15. Verfahren nach einem der vorhergehenden Ansprüche, **dadurch gekennzeichnet, dass** für jeden der unverschlüsselten Datenblöcke vor jeder Verschlüsselung desselben ein zufälliger Schlüssel-Manipulations-Wert ermittelt wird, mit welchem der Datenblock-Schlüssel verändert wird, und dass dieser zufällige Schlüssel-Manipulations-Wert in der Daten-Datenblock-Liste gespeichert wird.

## Claims

1. A process for storing data on a central server, wherein there is a multitude of users each having a user password which is used at least for generating a user key and wherein at least one client with stored data is assigned to each of at least some of said users and wherein at least some of said data are assigned as required to at least one data block to be uploaded and wherein, based on a unique data block ID value, each data block is compared to the data blocks on the server to find out whether a corresponding data block is already present on the server and wherein the data blocks which are not present on the server are uploaded to the central server and wherein a data-data block list, based on which data can be regenerated in their original form in a data recovery step when requested by the user from the central server, which is to be uploaded is created and uploaded to the central server, **characterized in**
**that** the following steps are carried out for each unencrypted data block on the client to identify the data blocks to be uploaded to the central server and create the data-data block list to be uploaded to the central server:
- generating a data block key exclusively based on the unencrypted data block using a key generation protocol so that the user password and other user-relevant data are not used for generating said key,
- encrypting the unencrypted data block based on said generated data block key using an encryption protocol to obtain an encrypted data block,
- generating a unique data block ID value based on the unencrypted data block and, optionally, on the information retrieval and/or key generation and/or encryption protocol and assigning said data block ID value to the encrypted data block using a data block ID generation protocol predefined for said user,
- transmitting said unique data block ID value from the client to the central server to receive a response indicating whether the encrypted data block assigned to said data block ID value is already present on the central server and uploading the encrypted data block if it is not already present on the central server,
- adding said unique data block ID value to the data-data block list which is to be uploaded to the central server,
- adding said data block ID value and said data block key into a data block-key list, if said data block ID value is not already included in said data block-key list, wherein it is possible for said data block-key list to be part of the data-data block list,
and in that based on all identified data blocks to be uploaded the following steps may be carried out:
- encrypting the data-data block list using a data-data block list key which is generated using a data-data block list key generation protocol which is managed by the user and only known to said user,
- encrypting said data block-key list using the user key,
- uploading the encrypted data-data block list and the encrypted data block-key list from the client to the central server,
the unencrypted data blocks, the unencrypted data-data block list, the unencrypted data block-key list and the generated data block keys and the user key remaining on the client,
the server sending data which are stored on the server in their encrypted form and cannot be decrypted by the server to the client in said data recovery step, so that data can only be recovered on the client.

2. The process according to claim 1, **characterized in that** said data block key is a hash value of the unencrypted data block.

3. The process according to claim 1, **characterized in that** key base information is generated based on the unencrypted data block using an information retrieval protocol and **in that** the data block key is generated exclusively based on said key base information, a sufficiently long, predetermined part of a hash value of the unencrypted data block being preferably used and said key base information being preferably added to said data block-key list instead of the data block key.

4. The process according to claim 1 or 3, **characterized in that** said data block key is generated from the data key information in a predetermined number of hash generation cycles starting from the hash value of the data key information, the hash value resulting from the respective previous hash cycle being used as the new starting hash value.

5. The process according to any one of the preceding claims, **characterized in that** the unencrypted data block is compressed first and then encrypted using the data block key.

6. The process according to claim 5, **characterized in that** the data block key is a hash value of the compressed data block.

7. The process according to claim 5, **characterized in that** the key base information is a sufficiently long, defined part of a hash value of the compressed data block and **in that** the actual data block key is computed from this hash value.

8. The process according to any one of the preceding claims, **characterized in that** the data block ID value corresponds to the hash value of the hash value of the unencrypted data block.

9. The process according to any one of the claims 1 to 7, **characterized in that** the data block ID value corresponds to the hash value of the encrypted data block.

10. The process according to any one of the preceding claims, **characterized in that** the data block ID value is sent to the server and the server reports back whether the corresponding data block is already present on the server or has to be uploaded, and **in that** the server sends a unique number for each data block ID value, assigned to said data block ID value by the server, back to the client, where this number is added to the data-data block and the data block-key lists as a new data block ID value and used for the data recovery step.

11. The process according to any one of the preceding claims, **characterized in that** all data block ID values, based on which the server determines whether the corresponding data blocks are already present on the server, at first generated on the client and are then sent to the server in a random order for the request.

12. The process according to any one of claims 1 to 11, **characterized in that** a variable number of bytes of each unencrypted data block is removed from a variable position and is added as additional information for each data block to the data-data block list together with information as to how many bytes were removed at which position.

13. The process according to any one of the preceding claims, **characterized in that** for encrypting the data-data block list a value which cannot be changed for said data-data block list and is publicly known is used as a basis for computing the initializing vector for a chaining process.

14. The process according to any one of the preceding claims, **characterized in that** random specifically marked, but otherwise irrelevant data of variable length is added to the data-data block list.

15. The process according to any one of the preceding claims, **characterized in that** a random key manipulation value for changing the data block key is determined for each unencrypted data block before each encryption and **in that** said random key manipulation value is stored in the data-data block list.

## Revendications

1. Procédé pour enregistrer des données sur un serveur central, chacun d'une pluralité d'utilisateurs ayant un mot de passe d'utilisateur qui est utilisé au moins pour générer un clé d'utilisateur et au moins un client sur lequel des données sont enregistrées étant attribué à chacun d'au moins une partie desdits utilisateurs et au moins une partie desdites données étant attribuée selon les besoins à au moins un bloc de données à être transféré et chacun bloc de données étant comparé aux blocs de données sur le serveur à l'aide d'une valeur unique d'identité de bloc de données pour déterminer si les blocs de données sont déjà présents sur le serveur et les blocs de données qui ne sont pas présents sur le serveur étant transférés sur le serveur central et une liste de données/blocs de données à transférer sur le serveur, à l'aide de laquelle les données peuvent être régénérées dans leur état original au cours d'une étape de récupération de données après une demande de l'utilisateur, étant établie et transférée sur le serveur central,
**caractérisé en ce**
**que** chaque bloc de données non crypté sur le client est soumis aux étapes suivantes pour identifier les blocs de données à transférer sur le serveur central et établir la liste de données/blocs de données à transférer sur le serveur central :
- générer une clé de bloc de donnée exclusivement sur la base d'un bloc de données non crypté en utilisant un protocole de génération de clé, en sorte que le mot de passe d'utilisateur et d'autres données d'utilisateur ne sont pas utilisés pour générer ladite clé,
- crypter le bloc de données non crypté en utilisant un protocole d'cryptage sur la base de ladite clé de bloc de données générée pour obtenir un bloc de données crypté,
- générer une valeur unique d'identification de bloc de données sur la base du bloc de données non crypté et, selon le cas, sur un protocole de récupération d'informations et/ou de génération de clé et/ou de cryptage et attribuer ladite valeur d'identité de bloc de données au bloc de données crypté en utilisant un protocole de génération d'identité de bloc de données prédéfinie pour l'utilisateur,
- transférer ladite valeur unique d'identification de bloc de données du client sur le serveur central pour obtenir une réponse du serveur si le bloc de données crypté attribué à ladite valeur d'identification de bloc de données est déjà présent sur le serveur central et transférer le bloc de données crypté sur le serveur central s'il n'y est pas encore présent,
- inscrire ladite valeur unique d'identification de bloc de données à la liste de données/blocs de données à transférer sur le serveur central,
- inscrire ladite valeur d'identification de bloc de données et ladite clé de données à une liste de blocs de données/clés si ladite valeur d'identification de bloc de données n'est pas encore compris dans ladite liste de blocs de données/clés, ladite liste de blocs de données/clés pouvant faire partie de la liste de données/blocs de données,
et en ce que les étapes suivantes peuvent être réalisées pour tous les blocs de données identifiés pour être transférés sur le serveur central :
- crypter la liste de données/blocs de données en utilisant une clé de liste de données/blocs de données qui est générée en utilisant un protocole de génération de clé de liste de données/blocs de données géré et connu exclusivement par l'utilisateur,
- crypter ladite liste de blocs de données/clés en utilisant la clé d'utilisateur,
- transférer la liste cryptée de données/blocs de données et la liste cryptée de blocs de données/clés du client sur le serveur central,
les blocs de données non cryptés, la liste non cryptée de données/blocs de données, la liste non cryptée de blocs de données/clés et les clés de data blocs générées et la clé d'utilisateur restant sur le client,
le serveur envoyant des données qui sont enregistrées sur le serveur dans leur état crypté et ne peuvent pas être décryptées par le serveur au client au cours de l'étape de récupération de données, de façon à ce qu'il ne soit possible de récupérer les données que sur le client.

2. Procédé selon la revendication 1, **caractérisé en ce que** la clé de bloc de données est une valeur de hachage du bloc de données non crypté.

3. Procédé selon la revendication 1, **caractérisé en ce que** des informations de base de clés sont générées à l'aide du bloc de données non crypté en utilisant un protocole de récupération d'informations et **en ce que** la clé de bloc de données est générée exclusivement à l'aide desdites informations de base de clés, de préférence en utilisant une partie prédéterminée suffisamment longue d'une valeur de hachage du bloc de données non crypté et les informations de base de clés étant de préférence inscrites à la liste de blocs de données/clés au lieu de la clé de bloc de données.

4. Procédé selon la revendication 1 ou 3, **caractérisé en ce que** la clé de bloc de données est générée à l'aide des informations de clé de données dans un nombre prédéterminé de cycles de génération de valeurs de hachage procédant de la valeur de hachage des informations de clé de données, la valeur de hachage résultant du cycle de hachage précédent étant utilisée comme nouvelle valeur de hachage de départ.

5. Procédé selon une des revendications précédentes, **caractérisé en ce que** le bloc de données non crypté est d'abord comprimé et puis crypté en utilisant la clé de bloc de données.

6. Procédé selon la revendication 5, **caractérisé en ce que** la clé de bloc de données est une valeur de hachage du bloc de données comprimé.

7. Procédé selon la revendication 5, **caractérisé en ce que** les informations de base de clé sont une partie défini suffisamment longue d'une valeur de hachage du bloc de données comprimé et **en ce que** la véritable clé de bloc de données est calculé sur la base de cette valeur de hachage.

8. Procédé selon une des revendications précédentes, **caractérisé en ce que** la valeur d'identification de bloc de données correspond à une valeur de hachage de la valeur de hachage du bloc de données non crypté.

9. Procédé selon une des revendications 1 à 7, **caractérisé en ce que** la valeur d'identification de bloc de données correspond à la valeur de hachage du bloc de données crypté.

10. Procédé selon une des revendications précédentes, **caractérisé en ce que** la valeur d'identification de bloc de données est envoyée au serveur et le serveur annonce si le bloc de données correspondant est déjà présent sur le serveur ou doit y être transféré et **en ce que** le serveur envoie un nombre unique pour chaque valeur d'identification de bloc de données, attribué à ladite valeur d'identification de bloc de données par le serveur, au client, où ledit nombre est inscrite sur la liste de données/blocs de données et la liste de blocs de données/clés comme nouvelle valeur d'identification de bloc de données et utilisé pour l'étape de récupération de données.

11. Procédé selon une des revendications précédentes, **caractérisé en ce que** toutes valeurs d'identification de bloc de données, à l'aide desquelles le serveur détermine si les blocs de données correspondants sont déjà présents sur le serveur, sont d'abord générées sur le client et puis envoyées au serveur dans un ordre aléatoire pour la demande.

12. Procédé selon une des revendications 1 à 11, **caractérisé en ce que** un nombre variable de bytes de chaque bloc de données non crypté est enlevé d'une position variable et ajouté comme information supplémentaire pour chaque bloc de données à la liste de données/blocs de données avec les informations concernant le nombre de bytes enlevés et leur position.

13. Procédé selon une des revendications précédentes, **caractérisé en ce que** une valeur qui ne peut pas être modifiée pour la liste de données/blocs de données et est publiquement connue est utilisée comme une base pour calculer le vecteur d'initialisation d'un procédé de chainage pour crypter ladite liste de données/blocs de données.

14. Procédé selon une des revendications précédentes, **caractérisé en ce que** des données aléatoires, spécifiquement marquées, mais autrement insignifiantes, d'une longueur variable sont ajoutées à la liste de données/blocs de données.

15. Procédé selon une des revendications précédentes, **caractérisé en ce que** une valeur aléatoire de manipulation de clé pour modifier la clé de bloc de données est déterminée pour chaque bloc de données non crypté avant chaque cryptage et **en ce que** ladite valeur aléatoire de manipulation de clé est enregistrée dans la liste de données/blocs de données.
